# EUROPEAN PATENT SPECIFICATION

(11) **EP 2 309 898 B1**
(45) Date of publication and mention of the grant of the patent: **30.11.2011**
(21) Application number: 09742433.7
(22) Date of filing: 06.05.2009
(51) Int. Cl.: A47J 27/18

(54) **MACHINE FOR PREPARING PASTA IN SINGLE PORTIONS**
MASCHINE ZUR ZUBEREITUNG VON PASTA-EINZELPORTIONEN
MACHINE POUR PRÉPARER DES PÂTES EN PORTIONS UNIQUES

(30) Priority: 06.05.2008 IT RM20080240
(43) Date of publication of application: 20.04.2011
(73) Proprietor: Fedeli, Benedetto, 98000 Monaco (MC)
(72) Inventor: Fedeli, Benedetto, 98000 Monaco (MC)
(74) Representative: Brunacci, Marco
(86) International application number: PCT/IB2009/005509
(87) International publication number: WO 2009/136260

(56) References cited:
- EP-A- 0 511 945
- EP-A- 1 388 314
- WO-A-2005/099532
- US-A- 4 685 386
- US-A1- 2003 051 606

## Description

### Technical Field

The present invention relates to a machine for preparing pasta in single portions.

### Background Art

Machines already exist designed to provide single ready portions of pasta dishes. One of these is described in the US patent application No. 20050142266 of Veronesi et al., published on 30 June 2005, relating to a process and an appliance for the fast preparation of Italian pasta dishes. The process described therein comprises the steps for supplying single-dose portions of precooked deep-frozen pasta and sauces or dressing kept at 0-4°C, the soaking of the portions in boiling water for 20-30 seconds, the draining of the pasta and the addition of sauce or dressing, after relevant heating.

On the other hand, the US patent application No. 200401777766 of Contessini et al., published on 16 September 2004, presents a machine for automatic cooking for restaurants, spaghetti-houses and the like, comprising a first cooking chamber having a valve for feeding raw pasta and an underlying valve for unloading cooked pasta and a second downstream cooking chamber having on the bottom a shutter for unloading the cooked pasta, each chamber being connected to a pipe for supplying cooking water produced by a boiler, to a pipe for draining the cooking water and to a steam exhaust pipe.

Furthermore, the patent application No. 20020152899 of Young et al., published on 24 October 2002, concerns an appliance and a system for the sale of pasta and sauce including a hopper for storing at least a portion of pasta, a device for cooking that pasta, a pasta dispenser, a sauce container with a distribution pipe directly on the cooked pasta, with alongside a sale appliance.

EP 0511945 discloses a machine for preparing pasta in single portions that comprises means for dosing the pasta and at least a raw material, a series of cooking pods including an upper part for pre steam cooking the raw material and a lower part adapted to receive and cooking the dosages of precooked deep frozen pasta. The machine disclosed in EP 0511945 also comprises a mixing pan suitable to receive the pasta and the sauce, transfer means for transfer the pasta and the sauce in the mixing pan being provided.As can be seen, the appliances of the mentioned patents actually supply single portions of pasta. Nevertheless, the product of these appliances is a combination of pasta and ready dressing, simply poured the one on the other.

### Object of the Invention

A principal object of the invention on the other hand is to supply a real dish of pasta, prepared in an automatic and proper way on the spur of the moment, as it might be prepared in the home or in a restaurant.

Another object of the invention is to automatically allow the preparation of single portions of pasta, and be able to choose how to dress these as preferred. According to the present invention, a machine for preparing pasta in single portions, suitable for automatically allowing the dosed feed of pasta, its cooking and its placing on dishes, comprising:
- dosing means for dosing the pasta and at least a raw material suitable for dressing the pasta;
- a series of cooking pots including:
   - an upper part for pre steam cooking the raw material suitable for dressing the pasta, and
   - a lower part for the separate cooking of the pasta in boiling water and of the dressing in a saucepan; and
- a mixing pan for mixing the pasta, means being provided for the transit of the cooked pasta and of the dressing from said series of cooking pots to said mixing pan
and characterized in that said dosing means comprise at least a hopper for the pasta and at least a hopper for a raw material suitable for dressing the pasta.

### Brief Description of the Drawings

The present invention will now be described referring to a preferred embodiment, though it should be understood that operational variations may be made without because of this moving outside the protection scope of the present invention and referring to the figures of the annexed drawing in which:
figure 1 shows a raised front view of a machine for preparing pasta in single portions according to the present invention;
figure 2 shows a raised side view of the machine in Figure 1;
figure 3 shows a perspective view of the machine in Figure 1; and figure 4 shows a section of the machine in Figure 3 through a vertical plane not passing through its longitudinal axis.

### Embodiments of the Invention

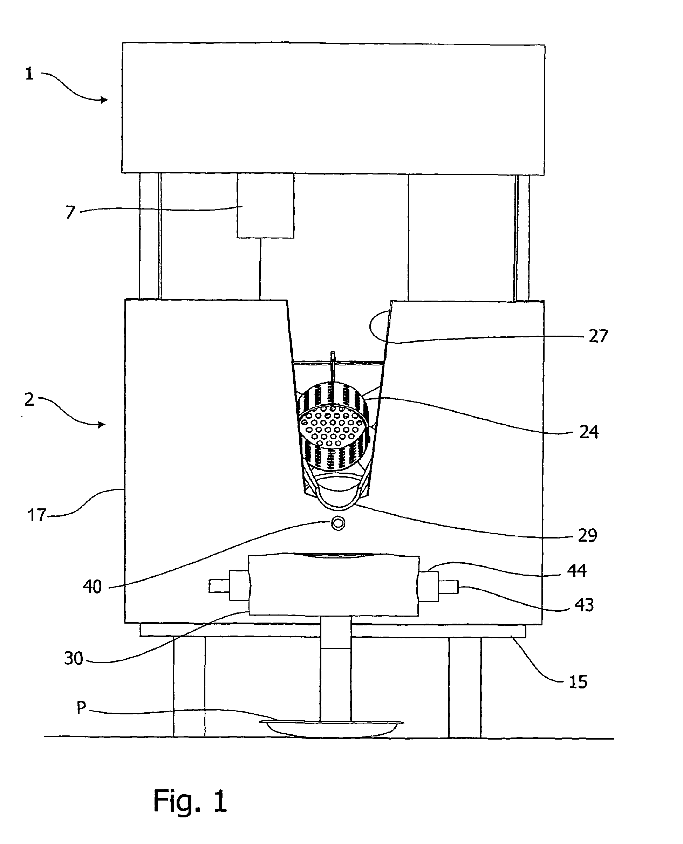

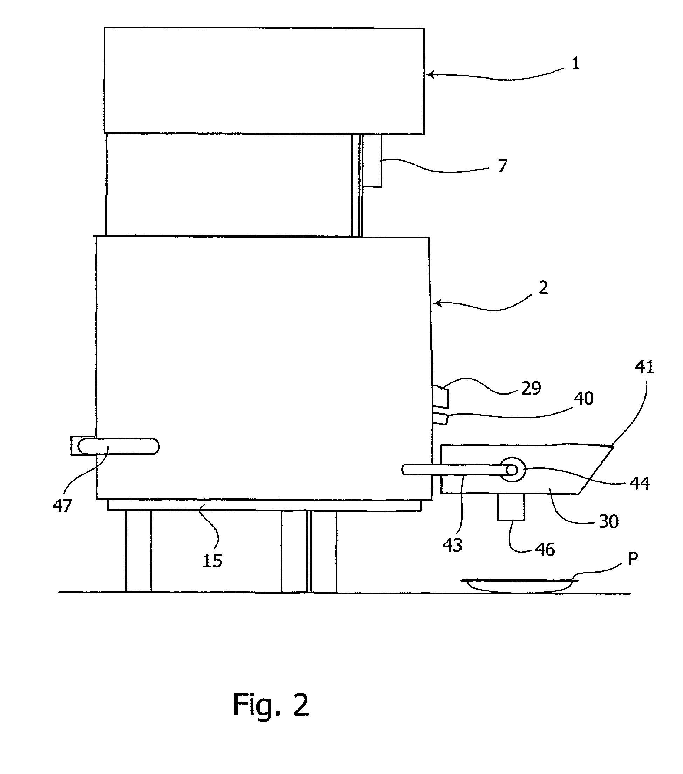

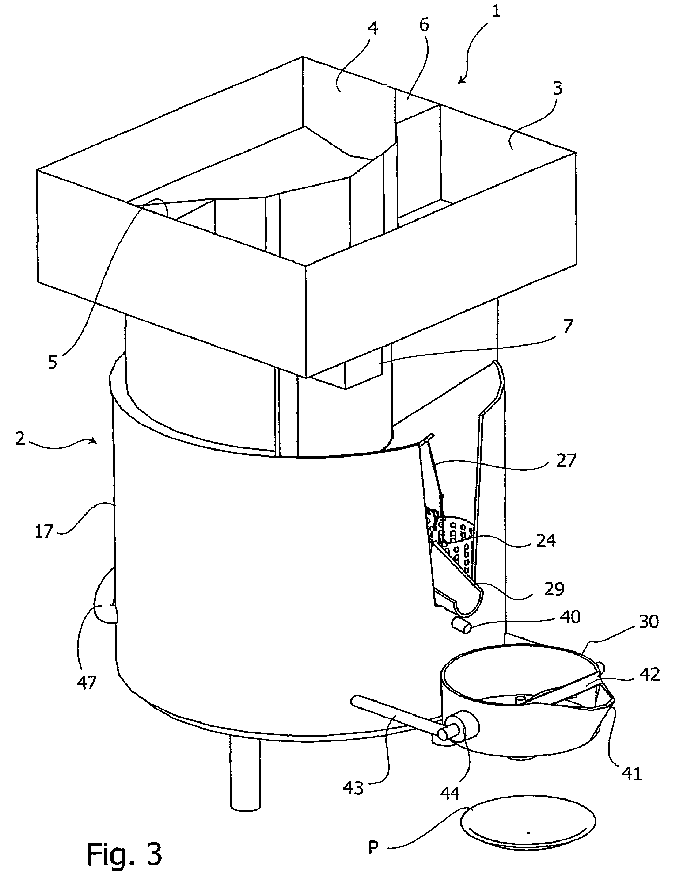

With reference to the drawings in the Figures 1 to 3, the general aspect is shown of the machine for preparing pasta in single portions according to the invention. It comprises dosing means for dosing the pasta and at least a raw material suitable for dressing the pasta, e.g., an area 1 with gravity-feed hoppers, and a series of cooking pots 2. As better shown in the Figure 3, the area 1 with gravity-feed hoppers comprises at least a hopper 3 for the pasta, a hopper 4 for a raw material suitable for dressing the pasta, generally but not only, tomato, an oil doser or the like 5 and a flavouring doser 6 such as basil. The hoppers have dosing shutters, like that schematised by 7, for feeding the pasta.

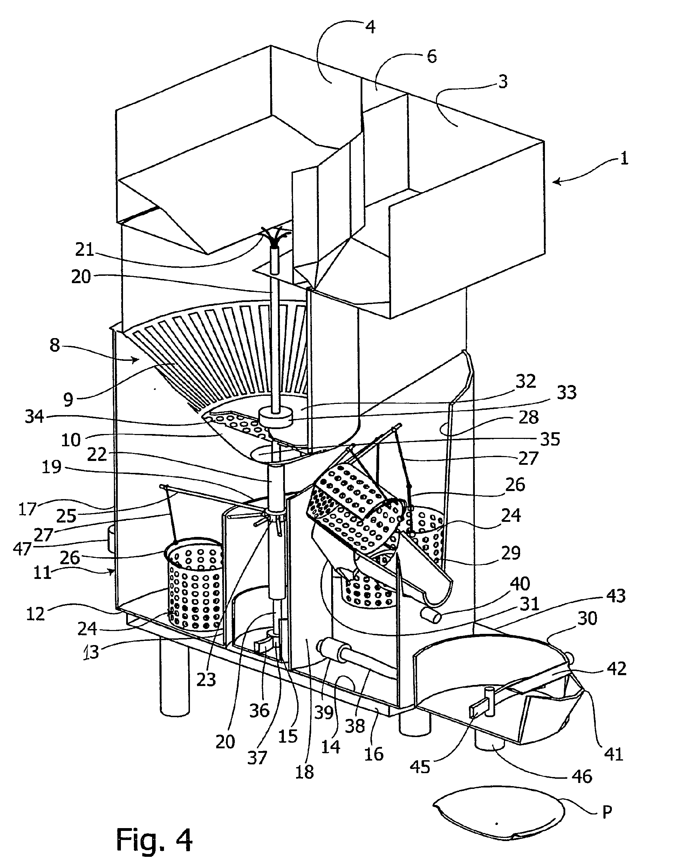

The hopper area 1 surmounts the series of cooking pots 2. As better shown in the Figure 4, which represents the machine of the invention in vertical section, the series of cooking pots 2 includes an upper part 8 for pre steam cooking the raw material suitable for dressing the pasta. The upper part 8 preferably has a truncated-cone shaped surface 9 with elongated slots to allow the steam cooking of the raw material for dressing. The truncated-cone shaped surface 9 has its cone shape turned downwards in a collection container 10.

The series of cooking pots 2 also comprises a lower part 11, including a hollow cylindrical body 12 and a cavity 13 underneath the collection container 10.

This way, the hollow cylindrical body 12, with round crown-shaped bottom plan 14, permits cooking the pasta in boiling water, while in the cavity 13 a saucepan 15 is positioned for cooking the dressing, as will be explained in detail below.

Underneath the series of pots 2, close to the lower part 11, are heat sources differentiated for the separate cooking of the pasta in boiling water in the hollow cylindrical body 12, and the dressing in the saucepan 15. The differentiated heat sources, e.g., electric heating elements, are not further detailed but can be positioned in the pedestal 16 of the machine.

The hollow cylindrical body 12 has coaxial walls, the one external 17, as external wall of the series of pots 2, the other internal 18. The internal coaxial wall 18 is shaped, in its upper edge, as profile of linear cam 19, which will be described in detail below.

At the centre of the hollow cylindrical body 12 a shaft 20 is pending, e.g., fixed, in a way not shown in detail, in the upper part of the machine. On the shaft 20 are mounted several rotary actuators in suitable positions. The rotary actuators are preferably moved by pneumatic motors, connected to a compressed-air source (not shown) through a plurality of supply pipes generically marked 21.

Externally coaxial to the shaft 20 is a central connection pipe 22 that permits the transit of raw material passed, as will be seen below, in the saucepan 15.

Around the central connection pipe 22 is a first low-speed rotary actuator 23. The rotary actuator 23 supports a plurality of baskets, generically indicated by 24 and intended to contain the pasta cooking in boiling water in the hollow cylindrical body 12. The baskets 24 are supported by the low-speed rotary actuator 23 so as to turn around the central connection pipe 22, and therefore around the shaft 20, according to the longitudinal axis of the series of pots as in a roundabout, at different heights with respect to the bottom 14 of the hollow cylindrical body 12 of the series of pots 2, and to be susceptible to tilting sideways.

In particular, the baskets 24 are supported by the low-speed rotary actuator 23 by means of the respective arms, at equally-distanced angles, generically indicated by 25. Each arm 25, hinged at one of its extremities to oscillate only on its vertical plane, on the low-speed rotary actuator 23, extends in a radial direction so as to slide circumferentially on the upper edge of the wall 18 as profile of linear cam 19 that makes the basket 24 hinged at the extremity of the arm 25 opposite the hinging point on the rotary actuator 23 lift up and drop down. The hinging of the basket 24 at the free extremity of the arm 25 is schematized like a double rigid connection, this too with flat hinges in a U-shaped handle 26 and in a central rod 27.

The arrangement of the arm 25 and of the handle 26 with central rod 27 is chosen together with the profile of linear cam 19 so the baskets 24 are immersed in the boiling water for most of the time of their rotation around the shaft 20, in which the profile of linear cam 19 is substantially horizontal. The profile of linear cam 19 lifts up close to an opening 28 of the series of pots 2, where a slide 29 is fitted for the exit of the pasta cooked "al dente" and its tipping into a mixing pan 30, which will be described below.

At the slide 29, inside the series of pots 2 a profile of surface cam 31 is provided which arranges the basket 24 in tilted position to convey the pasta cooked "al dente" onto the slide 29.

Subsequently, beyond the profile of surface cam 31 the pasta doser 7 (not shown in the Figure 4) is located above, to dispense a new portion of pasta, as will be described below during description of machine operation.

At the top, around the shaft 20 of the machine, cutting means are provided for cutting the raw material for dressing, e.g., fresh tomato. These cutting means, located on the bottom of the upper part 8 of the series of pots 2, are represented, very schematically, as a series of blade 32 integral with a second rotary actuator 33 and a grille 34, like the bottom of a standard tomato masher. Alternatively, other means can be provided for processing the raw material for dressing, such as a centrifuge or a squeezer, to cause the puréed raw material to end up in the collection container 10.

On the bottom of the collection container 10 is a union with the central connection pipe 22, externally coaxial with the shaft 20, for the transit of the puréed raw material into the underlying saucepan 15. In the union between the collection container 10 and the central connection pipe 22 is a dosing valve 35, not shown in detail to regulate the flow of the puréed raw material for dressing into the underlying saucepan 15.

In an alternative embodiment not shown in the illustrations, the machine 1 also comprises means for inserting in the series of pots 2 at least a pod containing one or more raw materials for the preparation of the pasta dressing sauce, meaning raw materials complementary to that contained in the hopper 4, such as oil, bacon and the like, or spices such as pepper, nutmeg and the like. The pod can also contain ready-to-use tomato sauce in the event of the hopper 4 containing a different raw material to be steam cooked, such as, for example, courgettes.

The machine 1 also comprises means for conveying the content of the pod to the lower part of the series of pots 2 and, more specifically, to the saucepan 15.

Below, around the shaft 20, a first stirrer 36 is moved by a third rotary actuator 37 and suitable for mixing the dressing in the saucepan 15.

From the saucepan 15 a pipe 38 for the cooked dressing protrudes, in which a dosing pump 39 is provided. The pipe 38 protrudes from the wall 17 of the pot with a nozzle 40 in a position underneath the slide 29 for the cooked pasta, at the mixing pan 30.

At the front of the mixing pan 30 is a spout 41 to pour the pasta and a partition 42 for regulating the transit of same. The mixing pan 30 is located suspended at the side of the series of pots 2 and has mixing means suitable for mixing the pasta cooked "al dente" with the dressing in association with tilting means, suitable for turning the mixing pan 30 to tilt the pouring spout 41 downwards and allow the portion of pasta to fall into an underlying dish.

Preferably, the mixing pan 30 is supported by the external wall 17 of the hollow cylindrical body 12 by means of small arms 43 more clearly shown in the Figure 3. On the small arms 43 are mounted fourth rotary actuators 44 which allow the mixing pan 30 to swing like tilting means together with the mixing means in the form of a second stirrer 45 rotating inside the mixing pan 30 by means of a motor 46 positioned outside the mixing pan 30. The bottom of the mixing pan 30 is preferably heated, e.g. by means of an electric heating element. Always making reference to the Figure 3 a pipe 47 is shown which allows launching jets of cooking water under pressure onto the baskets containing the pasta to keep it moving and not allow it to "stick". These same jets can be used to also wash the machine at the end of the cooking cycle, if supplied with washing liquids. Even though not shown in detail, the machine is suitably covered and equipped with channels for the elimination of fumes and steams, as well as the cooking water and washing liquids.

It should be evident that only the main features have been described of the machine in accordance with the invention and that many other parts are required for its correct operation. It must, e.g., have a control unit to regulate the temperature and times on the basis of the information received from suitably positioned thermostats, pressure gauges, various sensors. It is preferable to have a compressed-air generator to move the various rotary actuators so as to avoid the presence of electric motors and gear-operating systems which, in any case, could be used as an alternative.

The operation of the machine according to the invention is the following. In the hopper area 1 the following ingredients are positioned: the pasta in the hopper 3, the tomatoes in the hopper 4, and then oil or the like and flavourings in the dosers 5 and 6 respectively. In the lower part 11 of the series of pots 2, in particular in the hollow cylindrical body 12, water is placed kept boiling by the relevant heat source in the pedestal 16. In the upper part 8 of the same series of pots, the fresh tomato is made to fall from the hopper 4, taken as a typical ingredient for dressing the pasta. The fresh tomato is pre steam cooked in the truncated-cone part 9 above the hollow cylindrical body 12 and then conveyed by gravity to the cutting means with blade 32 and grille 34. The cutting means, which operate with controlled intermittency, purée the tomato which reaches the collection container 10 below by gravity. From the container 10, the puréed tomato is conveyed by gravity in a dosed way by means of the valve 35 and the central connection pipe 22 to the saucepan 15 where the sauce is cooked by means of a heat source distinct from that for cooking the pasta. Meanwhile the pasta is supplied by the doser 7 to a basket 24 and then, subsequently, is drowned in the boiling water by the carousel of baskets driven by the rotary actuator 23. One cycle is set to be covered in a period of time required to cook the pasta, e.g., 8 minutes. For this reason, the rotary actuator 23 is at low speed. Thanks to the profile of linear cam 19, at the end of cooking, the basket is positioned on the surface cam 31 which causes the contents of pasta cooked "al dente" to overturn into the mixing pan 30 through the slide 29. The dressing from the saucepan 15 reaches the same pan 30 through the nozzle 40 in a dosed way. The pasta cooked "al dente" with the sauce is mixed by means of the oscillating movement of the mixing pan 30 produced by the rotary actuators 44 and the stirrer 45 moved by the motor 46. Then, with a greater tilting of the mixing pan 30 the portion of pasta is poured into the underlying dish P.

The advantages of the invention are appreciable. The number of required portions can be obtained in an automatic way starting with fresh ingredients, without having to use preserved dressings. The required ingredients can be selected, to be pre steam cooked, as an alternative to tomato, or else all ingredients other than oil and flavouring dressing can be excluded. After use, the machine is automatically washable like any dish-washing machine, the technology of which is not described here, inasmuch as commonly known.

The characteristics of the machine can be changed with respect to those described, using equivalent components, without diverging from the ambit of the attached claims.

## Claims

1. Machine (1) for preparing pasta in single portions, suitable for automatically allowing the dosed feed of pasta, its cooking and its placing on dishes, comprising:
- dosing means for dosing the pasta and at least a raw material suitable for dressing the pasta;
- a series of cooking pots (2) including:
- an upper part (8) for pre steam cooking the raw material suitable for dressing the pasta, and
- a lower part (11) for the separate cooking of the pasta in boiling water and of the dressing in a saucepan (15); and
- a mixing pan (30) for mixing the pasta, means being provided for the transit of the cooked pasta and of the dressing from said series of cooking pots (2) to said mixing pan (30)
and **characterized in that** said dosing means comprise at least a hopper (3) for the pasta and at least a hopper (4) for a raw material suitable for dressing the pasta.

2. Machine (1) according to claim 1, **characterized in that** said mixing pan (30) comprises mixing means suitable for mixing the cooked pasta and the dressing sauce for mixing the pasta itself.

3. Machine (1) according to one or more of the preceding claims, **characterized in that** it comprises tilting means for tilting said mixing pan (30) for transferring its content into an underlying dish.

4. Machine (1) according to one or more of the preceding claims, **characterized in that** it comprises means for inserting at least a pod containing one or more raw materials for the preparation of the pasta dressing sauce.

5. Machine (1) according to one or more of the preceding claims, **characterized in that** the upper part (8) of the series of pots (2) for pre steam cooking has a truncated-cone shaped surface (9) with elongated slots, the truncated-cone shaped surface (9) having its cone shape turned downwards in a collection container (10); the lower part (11) of the series of pots (2) comprising a hollow cylindrical body (12), the cavity of the hollow cylindrical body (12) being underneath the collection container (10).

6. Machine (1) according to one or more of the preceding claims, **characterized in that** a low-speed rotary actuator (23) supports a plurality of baskets (24) suitable for containing the pasta cooking in boiling water in said hollow cylindrical body (12), the baskets (24) being supported by the low-speed rotary actuator (23) so as to turn with their central axis in a parallel way around the longitudinal axis of the series of pots (2) as in a roundabout, at different heights with respect to the bottom (14) of said hollow cylindrical body (12) of the pot (2), and to be susceptible to tilting sideways with respect to their central axis.

7. Machine (1) according to claim 6, **characterized in that** the baskets (24) are supported by the low-speed rotary actuator (23) by means of the respective arms (25) which, at one of their extremities, are hinged on the low-speed rotary actuator (23), extend in a radial direction so as to slide circumferentially on a profile of linear cam (19) that makes the baskets (24) hinged at the extremity of the arm (25) opposite the hinging point on the rotary actuator (23) lift up and drop down.

8. Machine (1) according to claim 7, **characterized in that** the pot (2) has an opening (28) on its sides with a slide (29) for the exit of the cooked pasta from the pot (2), a surface cam (31) being provided at the slide (29) to make the basket (24) tilt with respect to its central axis and pour the cooked pasta into the mixing pan (30).

9. Machine (1) according to claim 8, **characterized in that** each basket (24) receives the pasta from said dosing means as soon as it goes beyond said surface cam (31) for the tilting of the basket (24) around its own central axis.

10. Machine (1) according to one or more of the claims from 6 to 9, **characterized in that** cutting means for cutting the raw material for dressing are provided on the bottom of the upper part (8) of the pot (2), said cutting means including a blade (32) integral with a second rotary actuator (33) and a grille (34); below said cutting means being provided a collection container (10) for collecting the raw material for dressing puréed by the cutting means, in the bottom of the collection container means being provided suitable for pouring in a dosed way such raw material into the underlying saucepan (15).

11. Machine (1) according to one or more of the claims from 6 to 10, **characterized in that** a first stirrer (36) moved by a third rotary actuator (37) is in said saucepan (15).

12. Machine (1) according to one or more of the preceding claims, **characterized in that** from said saucepan (15) extends a pipe (38) for feeding the dressing intended to convey the dressing to said mixing pan (30) through a dosing pump (39).

13. Machine (1) according to one or more of the claims from 2 to 12, **characterized in that** said mixing means of the mixing pan (30) comprise a second stirrer (45) driven by a motor (46) positioned on the bottom of the mixing pan (30), outside it.

14. Machine (1) according to one or more of the claims from 3 to 13, **characterized in that** said tilting means comprise fourth rotary actuators (44) located on small arms (43) supporting in a swinging way the mixing pan (30) and connecting it to the pot (2).

15. Machine (1) according to one or more of the preceding claims, **characterized in that** said series of pots (2) has a system for moving the cooking water by means of jets under pressure onto the baskets.

## Patentansprüche

1. Maschine (1) zur Zubereitung von Pasta-Einzelportionen, geeignet, die dosierte Zugabe von Pasta, ihr Kochen und ihre Ablage auf Tellern zu erlauben, die aufweist:
Dosiereinrichtungen zum Dosieren der Pasta und mindestens eines zum Verfeinern der Pasta geeigneten Rohrmaterials ;
eine Reihe von Kochtöpfen (2) mit:
einem oberen Teil (8) zum Vordämpfen des zum Verfeinern der Pasta geeigneten Rohmaterial und
einem unteren Teil (11) zum separaten Kochen der Pasta in kochendem Wasser und der verfeinernden Sauce in einer Pfanne (15); und
eine Mischpfanne (30) zum Mischen der Pasta, wobei Einrichtungen zur Übergabe der gekochten Pasta und der verfeinernden Masse aus der Reihe der Kochtöpfe (2) in die Mischpfanne (30) bereitgestellt werden
und **dadurch gekennzeichnet ist, dass** die Dosiereinrichtung mindestens einen Füllbehälter (3) für die Pasta und mindestens einen Füllbehälter (4) für ein zum Verfeinern der Pasta geeignetes Rohmaterial aufweist.

2. Maschine (1) gemäß Anspruch 1, **dadurch gekennzeichnet, dass** die Mischpfanne (30) Mischeinrichtungen aufweist, die für das Mischen der gekochten Pasta und der verfeinernden Sauce zum Mischen der Pasta geeignet sind.

3. Maschine (1) gemäß einem oder mehr der vorangegangenen Ansprüche, **dadurch gekennzeichnet, dass** sie Kippeinrichtungen zum Kippen der Mischpfanne (30) aufweist, um ihren Inhalt auf einen darunter stehenden Teller zu übergeben.

4. Maschine (1) gemäß einem oder mehr der vorangegangenen Ansprüche, **dadurch gekennzeichnet, dass** sie Einrichtungen zum Einsetzen mindestens einer Schale, die ein oder mehr Rohmaterialien für die zubereitung der Pastasauce enthält, aufweist.

5. Maschine (1) gemäß einem oder mehr der vorangegangenen Ansprüche, **dadurch gekennzeichnet, dass** der obere Teil (8) der Reihe der Töpfe (2) für das Vordämpfen eine kegelstumpfförmige Oberfläche (9) mit länglichen Schlitzen hat, wobei die Kegelform der kegelstumpfförmigen Oberfläche (9) nach unten in einen Sammelbehälter (10) gerichtet ist; wobei der untere Teil (11) der Reihe der Töpfe (2) einen hohlzylindrischen Körper (12) aufweist und der Hohlraum des hohlzylindrischen Körpers (12) sich unterhalt des Sammelbehälters (10) befindet.

6. Maschine (1) gemäß einem oder mehr der vorangegangenen Ansprüche, **dadurch gekennzeichnet, dass** ein langsam drehender Drehantrieb (23) eine Vielzahl von Körben (24) trägt, die geeignet sind, die in kochendem Wasser kochende Pasta im hohlzylindrischen Körper (12) aufzunehmen, wobei die Körbe (24) vom langsam drehenden Drehantrieb (23) so getragen werden, dass sie wie in einem Karussell sich mit ihrer Mittelachse parallel um die Längsachse der Reihe der Töpfe (2), in unterschiedlichen Höhen in Bezug auf den Boden (14) des hohlzylindrischen Körpers (12) des Topfes (2), drehen und seitlich in Bezug auf ihre Mittelachse kippen können.

7. Maschine (1) gemäß Anspruch 6, **dadurch gekennzeichnet, dass** die Körbe (24) vom langsam drehenden Drehantrieb (23) mittels der jeweilige Arme (25) getragen werden, die an einem ihrer Enden mit dem langsam drehenden Drehantrieb (23) angelenkt verbunden sind, sich radial so erstrecken, dass sie am Umfang auf einem linearen Kurvenprofil (19) gleitern, das die Körbe (24), die am Ende des Arms (25) gegenüber dem Anlenkpunkt am Drehantrieb (23) angelenkt verbunden sind, veranlasst, sich zu heben und zu senken.

8. Maschine (1) gemäß Anspruch 7, **dadurch gekennzeichnet, dass** der Topf (2) auf seinen Seiten eine Öffnung (28) mit einer Rutsche (29) für den Austritt der gekochten Pasta aus dem Topf (2) besitzt, wobei an der Rutsche (29) eine Oberflächenschulter (31) bereitgestellt wird, damit der Korb (24) in Bezug auf seine Mittelachse gekippt wird und die gekochte Pasta in die Mischpfanne (30) geschüttet wird.

9. Maschine (1) gemäß Anspruch 8, **dadurch gekennzeichnet, dass** jeder Korb (24) die Pasta aus der Dosiereinrichtung übernimmt, sobald er über die Oberflächenschulter (31) hinaus wandert, damit der Korb (24) um seine eigene Mittelachse kippt.

10. Maschine (1) gemäß einem oder mehr der Ansprüche 6 bis 9, **dadurch gekennzeichnet, dass** eine Schneideinrichtung zum Schneiden des Rohmaterials zur Verfeinerung auf der Unterseite des oberen Teils (8) des Topfes (2) bereitgestellt wird, wobei die Schneideinrichtung ein mit dem zweiten Drehantrieb (33) eine Einheit bildendes Schneidemesser (32) und ein Sieb (34) hat; wobei unter der Schneideinrichtung ein Sammelbehälter (10) für das Aufnehmern des von der Schneideinrichtung pürierten Rohmaterials zum Verfeinern bereitgestellt wird und in der Unterseite des Sammelbehälters Einrichtungen bereitgestellt werden, die geeignet sind, dieses Rohmaterial dosiert in die darunter stehende Pfanne (15) zu schütten,

11. Maschine (1) gemäß einem oder mehr der Ansprüche 6 bis 10, **dadurch gekennzeichnet, dass** sich ein von einem dritten Drehantrieb (37) angetriebenes erstes Rührwerk (36) in der Pfanne (15) befindet.

12. Maschine (1) gemäß einem oder mehr der vorangegangenen Ansprüche, **dadurch gekennzeichnet, dass** sich aus der Pfanne (15) ein Rohr (38) für die Zugabe der verfeinernden Masse erstreckt, das die Aufgabe hat, die verfeinernde Masse durch eine Dosierpumpe (39) zur Mischpfanne (30) zu befördern.

13. Maschine (1) gemäß einem oder mehr der Ansprüche 2 bis 12, **dadurch gekennzeichnet, dass** die Mischeinrichtung der Mischpfanne (30) ein zweites Rührwerk (45) aufweist, das von einem Motor (46), der sich an der Unterseite der Mischpfanne (30) außerhalb derselben befindet, angetrieben wird.

14. Maschine (1) gemäß einem oder mehr der Ansprüche 3 bis 13, **dadurch gekennzeichnet, dass** die Kippeinrichtung vierte Drehantriebe (44) aufweist, die an kleinen Armen (43) angeordnet sind, welche die Mischpfanne (30) schwenkend tragen und sie mit dem Topf (2) verbinden.

15. Maschine (1) gemäß einem oder mehr der vorangegangenen Ansprüche, **dadurch gekennzeichnet, dass** die Reihe der Töpfe (2) ein System zum Bewegen des Kochwassers mit auf die Körbe gerichteten Druckstrahlen besitzt.

## Revendications

1. Machine (1) pour préparer des pâtes alimentaires en portions individuelles, apte à permettre de manière automatique l'alimentation dosée de pâtes alimentaires, leur cuisson et leur dressage sur des plats, comprenant :
- des moyens de dosage pour doser les pâtes alimentaires et au moins une matière première apte à la réalisation d'une sauce pour accommoder les pâtes alimentaires ;
- une série de pots de cuisson (2) comprenant :
- une partie supérieure (8) pour la pré-cuisson à la vapeur de la matière première destinée à la réalisation de la sauce pour accomoder les pâtes alimentaires, et
- une partie inférieure (11) pour la cuisson séparée des pâtes alimentaires dans de l'eau bouillante et de la sauce dans une casserole (15) ; et
- un bac (30) de mélange pour mélanger les pâtes alimentaires, des moyens étant prévus pour le transfert des pâtes alimentaires et de l'assaisonnement de ladite série de pots de cuisson (2) audit bac de mélange (30),
***caractérisée en ce que*** lesdits moyens de dosage comprennent au moins une trémie (3) pour les pâtes alimentaires et au moins une trémie (4) pour une matière première apte à la réalisation d'une sauce pour accommoder les pâtes alimentaires.

2. Machine (1) selon la revendication 1, ***caractérisée en ce que*** ledit bac de mélange (30) comprend des moyens de mélange apte à mélanger les pâtes alimentaires cuites et la sauce.

3. Machine (1) selon l'une ou plusieurs des revendications précédentes, *caractérisée en ce qu*'elle comprend des moyens d'inclinaison pour incliner ledit bac de mélange (30) afin de transférer son contenu dans un plat placé au-dessous.

4. Machine (1) selon l'une ou plusieurs des revendications précédentes, *caractérisée en ce qu*'elle comprend des moyens pour insérer au moins une dosette contenant une ou plusieurs matières premières pour la préparation de la sauce pour les pâtes.

5. Machine (1) selon l'une ou plusieurs des revendications précédentes, ***caractérisée en ce que*** la partie supérieure (8) de la série de pots (2) pour la pré-cuisson à la vapeur possède une surface tronconique (9) avec des fentes longitudinales, la surface tronconique (9) ayant sa forme conique orientée vers le bas dans un récipient de collecte (10) ; la partie inférieure (11) de la série de pots (2) comprenant un corps cylindrique creux (12), la cavité du corps cylindrique creux (12) se situant sous le récipient de collecte (10).

6. Machine (1) selon l'une ou plusieurs des revendications précédentes, *caractérisée en ce qu*'un actionneur rotatif à faible vitesse (23) supporte une pluralité de paniers (24) aptes à contenir les pâtes alimentaires cuisant dans l'eau bouillante dans ledit corps cylindrique creux (12), les paniers (24) étant supportés par l'actionneur rotatif à faible vitesse (23) de façon à tourner avec leur axe central parallèlement autour de l'axe longitudinal de la série de pots (2) comme dans un manège, à différentes hauteurs par rapport au fond (14) dudit corps cylindrique creux (12) de pots (2), et à pouvoir s'incliner latéralement par rapport à leur axe central.

7. Machine (1) selon la revendication 6, ***caractérisée en ce que*** les paniers (24) sont supportés par l'actionneur rotatif à faible vitesse (23) au moyen de bras respectifs (25) qui, à l'une de leurs extrémités, sont articulées sur l'actionneur rotatif à faible vitesse (23), s'étendent dans une direction radiale de manière à glisser circonférentiellement sur un profilé de came linéaire (19) qui fait se lever et retomber les paniers (24) articulés à l'extrémité du bras (25) à l'opposé du point d'articulation sur l'actionneur rotatif (23).

8. Machine (1) selon la revendication 7, ***caractérisée en ce que*** le pot (2) présente une ouverture (28) latérale avec une glissière (29) pour la sortie des pâtes cuites hors du pot (2), une came superficielle (31) étant présente sur la glissière (29) pour faire s'incliner le panier (24) par rapport à son axe central et verser les pâtes cuites dans le bac de mélange (30).

9. Machine (1) selon la revendication 8, ***caractérisée en ce que*** chaque panier (24) reçoit les pâtes desdits moyens de dosage dès qu'il va au-delà de ladite came superficielle (31) pour l'inclinaison du panier (24) autour de son axe central.

10. Machine (1) selon l'une ou plusieurs des revendications 6 à 9, ***caractérisée en ce que*** des moyens coupants destinés à couper la matière première pour la sauce sont présents sur le fond de la partie supérieure (8) du pot (2), lesdits moyens coupants comprenant une lame (32) solidaire d'un deuxième actionneur rotatif (33) et d'une grille (34) ; sous lesdits moyens coupants étant présent un récipient de collecte (10) pour collecteur la matière première pour la sauce, mise en purée par les moyens coupants, dans le fond du récipient de collecte des moyens étant présents, aptes à verser de manière dosée cette matière première dans la casserole (15) située au-dessous.

11. Machine (1) selon l'une ou plusieurs des revendications 6 à 10, ***caractérisée en ce* qu'**un premier agitateur (36) mû par un troisième actionneur rotatif (37) se trouve dans ladite casserole (15).

12. Machine selon l'une ou plusieurs des revendications précédentes, ***caractérisée en ce que**,* de la casserole (15) part une canalisation (38) pour l'alimentation en sauce, destinée à acheminer la sauce jusqu'audit bac de mélange (30) grâce à une pompe doseuse (39).

13. Machine selon l'une ou plusieurs des revendications 2 à 12, ***caractérisée en ce que*** lesdits moyens de mélange du bac de mélange (30) comprennent une deuxième agitateur (45) entraîné par un moteur (46) positionné sur le fond du bac de mélange (30), à l'extérieur de celui-ci.

14. Machine selon l'une ou plusieurs des revendications 3 à 13, ***caractérisée en ce que*** lesdits moyens d'inclinaison comprennent des quatrièmes actionneurs rotatifs (44) situés sur des bras (43) de petites dimensions supportant de manière oscillante le bac de mélange (30) et le raccordant au pot (2).

15. Machine selon l'une ou plusieurs des revendications précédentes, ***caractérisée en ce que*** ladite série de pots (2) possède un système pour agiter l'eau de cuisson au moyen de jets sous pression sur les paniers.
